# EUROPEAN PATENT SPECIFICATION

(11) **EP 4 355 522 B1**
(45) Date of publication and mention of the grant of the patent: **29.07.2026**
(21) Application number: 22825962.8
(22) Date of filing: 20.06.2022
(51) Int. Cl.: B23K 26/14, B23K 26/70, B23K 26/21, B23K 26/34, B23K 26/354, B23K 1/005, B23K 26/00, B23K 26/352, B23K 26/36, B23K 37/00, B23K 37/006

(54) **MATERIAL PROCESSING FUNCTIONALITY IN HANDHELD LASER SYSTEM**
MATERIALVERARBEITUNGSFUNKTIONALITÄT IN EINEM TRAGBAREN LASERSYSTEM
FONCTIONNALITÉ DE TRAITEMENT DE MATÉRIAU DANS UN SYSTÈME LASER PORTATIF

(30) Priority: 18.06.2021 US 202163212290 P
(43) Date of publication of application: 24.04.2024
(73) Proprietor: IPG Photonics Corporation, Marlborough, MA 01752 (US)
(72) Inventor: LY, Nam, Webster Road Oxford, MA 01540 (US); MARKUSHOV, Iurii, Webster Road Oxford, MA 01540 (US); GRAPOV, Yuri, Webster Road Oxford, MA 01540 (US); MONVELDT, Sergey, Webster Road Oxford, MA 01540 (US); NOVIKOV, Sergei, Webster Road Oxford, MA 01540 (US)
(74) Representative: Peterreins Schley
(86) International application number: PCT/US2022/034172
(87) International publication number: WO 2022/266534

(56) References cited:
- WO-A1-2020/020483
- CN-A- 110 666 355
- CN-A- 110 666 355
- CN-U- 212 350 766
- CN-U- 212 350 766
- US-A1- 2005 189 331
- US-A1- 2005 189 331
- US-A1- 2020 269 350
- US-A1- 2020 269 350

## Description

### CROSS-REFERENCE TO RELATED APPLICATIONS

The present application claims priority to U.S. Provisional Patent Application No. 63/212,290, filed on June 18, 2021, titled "MATERIAL PROCESSING FUNCTIONALITY IN HANDHELD LASER SYSYEM

The present application relates to PCT International Application No. PCT/US2021/047498 titled "HANDHELD LASER SYSTEM" filed on August 25, 2021

### BACKGROUND

### Technical Field

The technical field relates generally to a laser device that can be used for material processing operations, and more specifically to a laser device configured with a modular nozzle assembly. nozzle assembly.

### Background Discussion

Laser-based material processing equipment with high power capacities (e.g., at least 1 kW) have been conventionally used for industrial cutting and welding, but have typically been too expensive for many smaller machine shops or other smaller-scale end users. However, over time the average power of laser diodes has increased significantly while their average price per watt has decreased exponentially. In addition, technological advances have been made in higher power laser systems. These factors make it more feasible to implement higher power lasers into smaller material processing systems, such as handheld laser devices. Such systems would not only be desirable for smaller industrial shops, but these devices would be especially usedful in application where larger systems are impractical or impossible to use.

Fiber laser technology in particular offers several advantages over other laser technologies, such as excimer or CO₂ systems. Besides lower maintenance costs, fiber laser technology also offers high wall plug efficiencies, long diode lifetimes, and can be more easily transported.

Besides cutting and welding, other non-limiting examples of laser-based material processes include drilling, brazing, soldering, cladding, and other heat treatments such as cleaning and passivation. Different nozzles can be emplozed to perform different laser-based material processing operations. Some applications may require two or more different material processes. It would be desirable to implement and provide a handheld laser device with the ability to switch between different nozzle types with ease. This reduces equipment costs, since the application would not require completely separate pieces of laser material processing equipment, and reduces processing time for the operator since the same "base" handheld laser device or laser head can be used with a simple swapping of nozzle type to perform the different material processing operations CN 212 350 766 U discloses a hand-held laser welding head blowing assembly.

### SUMMARY

Aspects and embodiments are directed to methods and systems for performing material processing operations using a handheld laser or laser head. In accordance with the invention, there is provided a nozzle assembly for performing material processing operations with a handheld laser system on a surface of a workpiece, the handheld laser system having a laser source configured to generate laser radiation, a handheld device that guides the laser radiation, and an optical fiber coupling the handheld device to the laser source, the nozzle assemly including a nozzle configured to deliver the laser radiation to the surface, and a coupling mechanism that includes a retaining portion formed on an output end of the handheld device, and an engagement portion configured to be releasably attachable to the nozzle and engage with the retaining portion.

The retaining portion is formed on an annular surface of the output end. The annular surface is configured with at least one recess and a ball disposed within the at least one recess. In a further example, the engagement portion comprises an annular collar, and inner circumferential surface of the annular collar configured with at least one pair of arcuate shaped slots, each slot configured to receive a ball of the at least one recess and ball. In a further example, the pair of arcuate shaped slots includes a first arcuate shaped slots configured to engage with the ball, and a second arcuate shaped slot configured to lock the engagement portion to the retaining portion when the engagement portion is rotated with respect to the retaining portion. In a further example, the first arcuate shaped slot is sized to be larger than the second arcuate shaped slot. In another example, the annular collar is configured with an indexing feature that corresponds to an indexing feature positioned on the output end of the handheld device. In a further example, each of the indexing features are configured as a visible indexing mark.

In one example, the engagement portion further comprises a apring that engages with an inner surface of the engagement portion In a further example, the engagement portion comprises an outer ring and an inner ring, the inner ring configured with the annular collar having the pair of rcuate shaped slots, and the outer ring configured with the inner surface that engages with the spring. In another example, the nozzle assembly further includes includes an O-ring positioned between the outer ring and the inner ring.

In one example, the coupling mechanism is configured as a twist-lock mechanism.

In one example, the coupling mechanism does not include threads.

In one example, the nozzle assembly further includes a tightening device configured to releasably secure the nozzle against the engagement portion.

In one example, the output end of the handheld device is configured with at least one gas port for supplying gas to the nozzle.

In one example, the nozzle is configured as a cutting nozzle, the cutting nozzle comprising an outlet for permitting laser radiation and the gas to exit the cutting nozzle, and a z-axis focal length adjustment mechanism.

In one example, the nozzle comprises a nozzle extension having an inlet, an outlet, and a central aperture for permitting laser radiation and the gas to enter the central aperture through the inlet and to exit through the outlet. In a further example, at least a portion of an interior surface of the central aperture of the nozzle extension is configured with a debris shield that restricts passage of debris generated during a material process operation. In one example, the debris shield comprises threads on the interior surface of the central aperture. In a further example, the portion of the interior surface configured with the debris shield is at least partially tapered. In oneexample, the nozzle is configured with a protective window and the debris shield inhibits material processing debris from reaching the window.

In one example, the engagement portion further comprises an attachment mechanism that attaches to the nozzle extension.

In one example, the nozzle further comprises an external wire feeding device that attaches to the nozzle extension, the wire feeding device configured to supply wire material to the surface. In one example, the external wire feeding device is disposed below the nozzle extension. In one example, the gas exiting through the outlet of the nozzle extension is a primary source of gas and the nozzle further comprises an external wire feeding and gas device that attaches to the nozzle extension, the external feeding and gas device configured to supply wire material and a secondary source of gas to the surface. In one example, the external wire feeding and gas device includes a central aperture sized to fit around at least a portion of an outer peripheral wall of the nozzle extension, a gas inlet coupled to a source of gas, a gas outlet configured as an annular opening that surrounds the central aperture, a wire material inlet coupled to a source of wire material, and a wire material outlet configured to supply the wire material to the surface. In a further example, the wire material outlet is disposed below the gas outlet. In one example, the nozzle assembly further includes a gas lens device configured to surround at least a portion of the nozzle extension and at least a portion of a nozzle tip attached to the nozzle extension, the gas lens device having a gas outlet configured as an annular opening that surrounds the nozzle tip. In one example, the nozzle is configured to perform at least one a welding, drilling, cutting, brazing, soldering, cladding, ablation, and heat treating material process operation. In accordance with another exemplary embodiment, there is provided a nozzle assembly for performing material processing operations with laser radiation on a surface of a workpiece, the nozzle assembly including a nozzle configured to deliver the laser radiation to the surface, and a coupling mechanism that includes a retaining portion formed on an output end of a laser head that directs laser radiation from a laser source, and an engagement portion configured to be releasably attachable to the nozzle and engage with the retaining portion. In one example, the retaining portion is formed on an annular surface of the output end of the laser head. In on example, the annular surface is configured with at least one recess and a ball disposed within the at least one recess. In one example, the engagement portion comprises an annular collar, an inner circumferential surface of the annular collar configured with at least one pair of arcuate shaped slots, each slot configured to receive a ball of the at least one recess and ball. In one example, the pair of arcuate shaped slots includes a first arcuate shaped slot configured to engage with the ball, and a second arcuate shaped slot configured to lock the engagement portion to the retaining portion when the engagement portion is rotated with respect to the retaining portion. In one example, the first arcuate shaped slot is sized to be larger than the second arcuate shaped slot. In one example, the engagement portion further comprises a spring that engages with an inner surface of the engagement portion. In one example, the engagement portion comprises an outer ring and an inner ring, the inner ring configured with the annular collar having the pair of arcuate shaped slots, and the outer ring configured with the inner surface that engages with the spring. In one example, the nozle assembly further comprises an O-ring positioned between the outer ring and the inner ring. In one example, the coupling mechanism is configyred as a twist-lock mechanism. In one example, the coupling mechanism does not include threads. In one example, the nozzle assembly further comprises a tightening device configured to releasably secure the nozzle against the engagement portion. In one examole, the output end of the laser head is configured with at least one gas port for supplying gas to the nozzle. In one example, the nozzle comprises a nozzle extension having an inlet an outlet, and a central aperture for permitting laser radiation and the gas to enter the central aperture through the inlet and to exit through the outlet. In one example, at least a portion of an interior surface of the central aperture of the nozzle extention is configured with a debris shield that restricts passage of debris generated during a material process operation. In one example, the debris shield comprises threads on the interior surface of the central aperture. In one example, the portion of the interior surface configured with the debris shield is at least partially tapered. In one example, the nozzle is configured with a protectiv window and the debris shield inhibits material proccessing debris from reaching the window. In one example, the engagement portion further comprises an attachment mechanism that attaches to the nozzle extensios. In one example, the nozzle is configured to perform at least one of a welding, drilling, cutting, brazing, soldering, cladding, ablation, and heat treating material process operation.

In accordance with another aspect, not covered by the present invention, there is provided a method for performing material processing operations with a handheld laser system on a surface of a workpiece, the handheld laser system having a laser source configured to generate laser radiation, a handheld device that guides the laser radiation, and an optical fiber coupling the handheld device to the laser source, the method including providing a coupling mechanism that includes a retaining portion formed on an output end of the dandheld device, and an engagement portion configured to be releasably attachable to a nozzle and engage with the retaining portion. In one example, the method further includes providing the nozzle. In one example, the coupling mechanism is configured as a twist-lock mechanism.

Still other aspects, embodiments, and advantages of these example aspects and embodiments, are discussed in detail below. Moreover, it is to be understood that both the foregoing information and the following detailed description are merely illustrative examples of various aspects and embodiments, and are intended to provide an overwiew or framework for understanding the nature and character of the claimed aspects and embodiments.

### BRIEF DESCRIPTION OF DRAWINGS

Various aspects of at least one embodiment are discused below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented be a like numeral. For purposes of clarity, not every component may be labeled in every figure. In the figures:
FIG. 1 is a schematic representation of one example of a handheld laser system according to aspects of the present disclosure;
FIG. 2 is a perspective view of a noozle assembly attached to a handheld laser device in accordance with aspects of the invention;
FIGS. 3A and 3B are photoghraps of a noozle assembly in accordance with aspects of the invention;
FIG. 4 is a first perspective view of noozle assembly detached from a handheld laser device in accordance with aspects of the invention;
FIG. 5 is a close-up portion of FIG. 4 showing a coupling mechanism used to attach the noozle assembly to the handheld laser device in accordance with aspects of the invention;
FIG. 6 is a second perspective view of the nozzle assembly detached from a handheld laser device in accordance with aspects of the invention;
FIGS. 7A-7D are photographs of retaining portion of a coupling mechanism in accordance with aspects of the invention;
FIG. 8 is a partial cutaway perspective view of a coupling mechanism in accordance with aspects of the invention;
FIG. 9 is a photograph of an engagement portion and a tightening device in accordance with aspects of the invention;
FIG. 10 is a photograph of the engagement portion of FIG.9 with the tightening device removed;
FIG. 11 is a photograph of engagement portion of a coupling mechanism in accordance with aspects of the invention;
FIG. 12 is a photograph of an indexing feature on a handheld laser device in accordance with aspects of the invention;
FIG. 13 is a photograph showing a side view of an engagement portion and a tightening device in accordance with aspects of the invention;
FIG. 13A is a photograph showing a front view of the engagement portion of FIG. 13;
FIG. 13B is a photograph showing in a perspective view of tightening device of FIG. 13;
FIG. 14A is a photograph showing a side perspective view of a second example of an engagement portion and tightening device in accordance with aspects of the invention;
FIG. 14B is a photograph showing a front perspective view of the engagement portion of FIG. 14A;
FIG. 15 is a partial cuteaway perspective view of a coupling mechanism using the engagement portions of FIG. 14A and 14B in accordance with aspects of the invention;
FIG. 16 is a photograph of an input end of handheld laser device in accordance with aspects of the invention;
FIGS. 17A and 17B are photographs of a nozzle extension with one example of a welding noozle tip in accordance with aspects of the invention;
FIG. 18 is a photograph of a nozzle extension with another example of a welding nozzle tip in accordance with aspects of the invention;
FIG. 19 is a schematic representation of a cross sectional view of the nozzle extension of FIGS. 17A, 17B, and 18;
FIG. 20 is a photograph of one example of a nozzle configured with wire feeding capability in accordance with aspects of the invention;
FIG. 21A is a photograph of a side view of another example of a nozzle configured with wire feeding capability in accordance with aspects of the invention
FIG. 21B is a photograph of an end view of the nozzle of FIG. 21A;
FIGS. 22A and 22B are photographs of another example of a nozzle configured with wire feeding capability in accordance with aspects of the invention;
FIG. 23 is a schematic representation of an end view of the nozzle of FIGS. 22A and 22B;
FIGS. 24A and 24B are photographs of one example of a gas lens configuration in accordance with aspects of the invention;
FIG. 25 is a perspective view of a cutting nozzle in accordance with aspects of the invention; and
FIG. 26 is a schematic representation of a nozzle assembly attached to a laser head in accordance with aspects of the invention.

### DETAILED DESCRIPTION

Reference is made herein to PCT International Application No. PCT/US2021/047498, hereafter referred to as "the base handheld laser application." The base handheld laser application describes a handheld laser system that includes an air-cooled laser source that is coupled to a handheld component via an optical fiber. The handheld laser system has power capabilities that are on the order of at least 1 kW and is configured with beam wobbling capability.

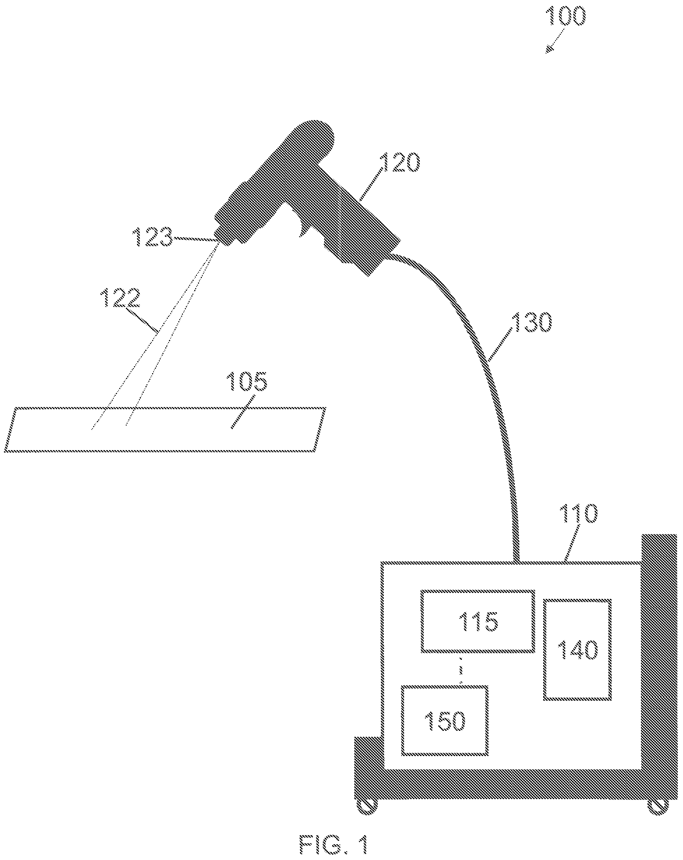

FIG. 1 illustrates a schematic representation of one example of a handheld laser system 100 that has similarities to the handheld laser system disclosed in the base handheld laser application. These similarities include a laser source 115, a controller 150, a housing that is configured as a handheld apparatus 120 (also referred to herein as a handheld device), an optical fiber 130 that couples the laser source 115 to the handheld apparatus 120, a laser module 110 that houses the laser source 115, the controller 150, and an air-cooling system 140 that cools the laser source 115. The laser module 110 can be placed on a moveable cart. The laser source 116 emits laser light at a wavelength (e.g., Yb 1030-1090 nm) for performing a material processing operation on the workpiece 105 with a laser beam 122 of the emitted laser light. In some embodiments, the laser source 115 emits laser radiation having a power of about 1500 W. The handheld apparatus 120 is also configured with beam wobbling capability.

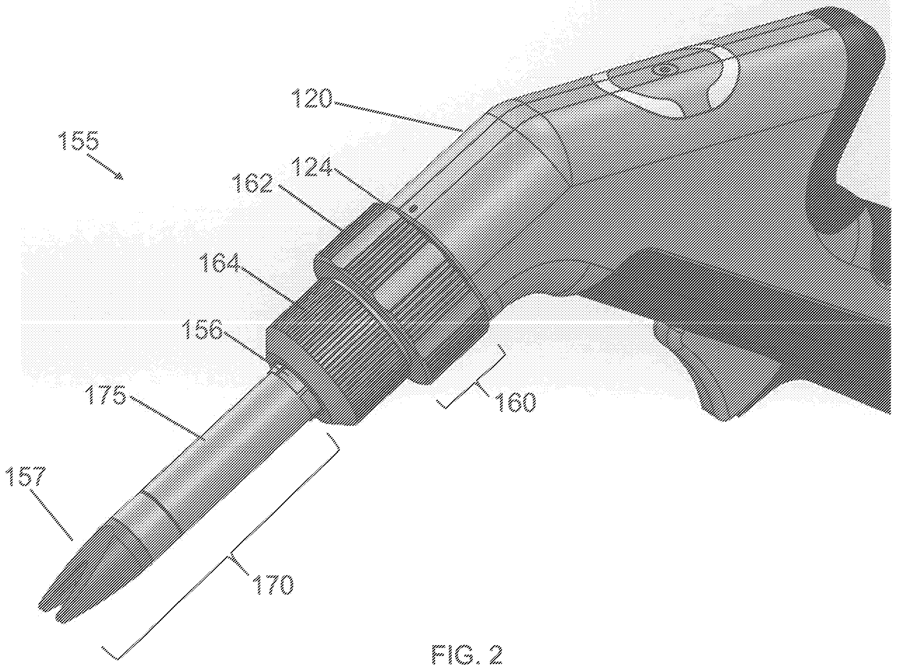

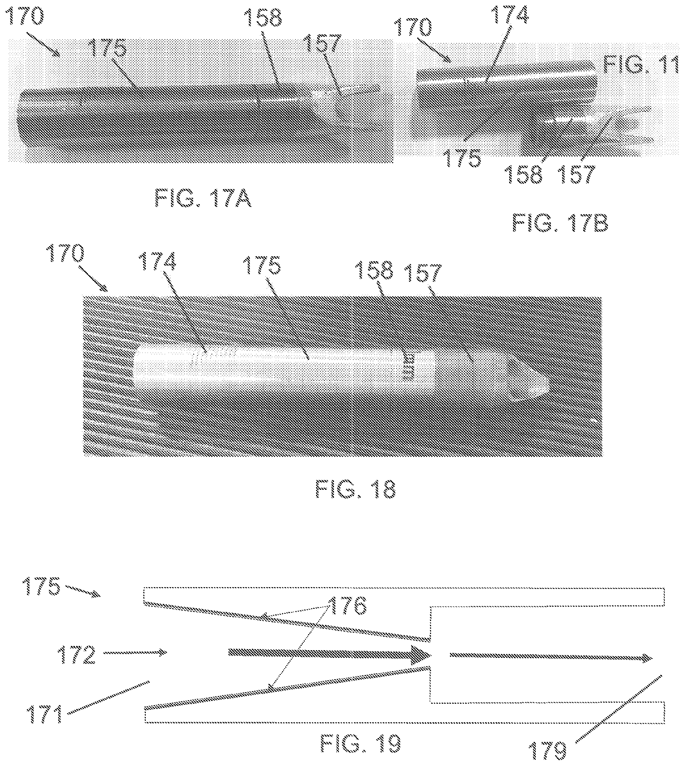

The housing configured as a handheld apparatus 120 has an outlet 123 or exit for the laser beam 122. Throughout the present description, the term "handheld" is understood to refer to a laser device that is both is both small and light enough to be readily held in and operated by one or both hands of a user. Furthermore, the handheld laser device should be portable, so that it may be easily moved around by the user during laser processing. However, while embodiments of the present invention are referred to as "handheld" and may be used as standalone portable devices, the handheld laser device may, in some embodiments, be connected to and used in combination with stationary equipment. In accordance with at least one embodiment and turning now to FIGS. 2-6, a nozzle assembly, generally indicated at 155 is shown. The nozzle assembly 155 can be used for performing material processing operations on a surface of a workpiece with a handheld laser system such as that described in the base handheld laser application. As discussed previously in reference to FIG. 1, such a handheld laser system has a laser source 155 configured to generate laser radiation, a handheld device 120 that guides the laser radiation, and an optical fiber 130 coupling the handheld device 120 to the laser source 115. The nozzle assembly 155 comprises a nozzel (e.g., nozzle 170 in FIGS. 17A, 17B, 18, 20, nozzles 180, 190, 200 discussed below) configured to deliver the laser radiation to the surface of the workpiece and a cupling mechanism 160 configured to attch the nozzle to the handheld device 120.

In accordance with certain embodiments, the coupling mechanism 160 is configured as a twist-lock mechanism. One non-limiting example of a twist-lock mechanism is described below, which uses a post and groove configuration where posts are formed on one component and selected configurations of grooves are formed on the secound component that are shaped to first seat the post and then when the first component is twisted to move the post further into a groove to secure the first and second components together.

In accordance with one or more embodiments, the coupling mechanism 160 and/or one or more components of the coupling mechanism 160 do not include threads. This allows for certain advantages, including the ability to quickly change attachments, a longer operating life, a decreased possibility of being darnaged (e.g., cross threading), the removal of a need for separate tools, and a solid engagement and lock (versus a partilly threaded attachment). According to at least one embodiment, the retaining 161 (described in further detail below) does not include threads.

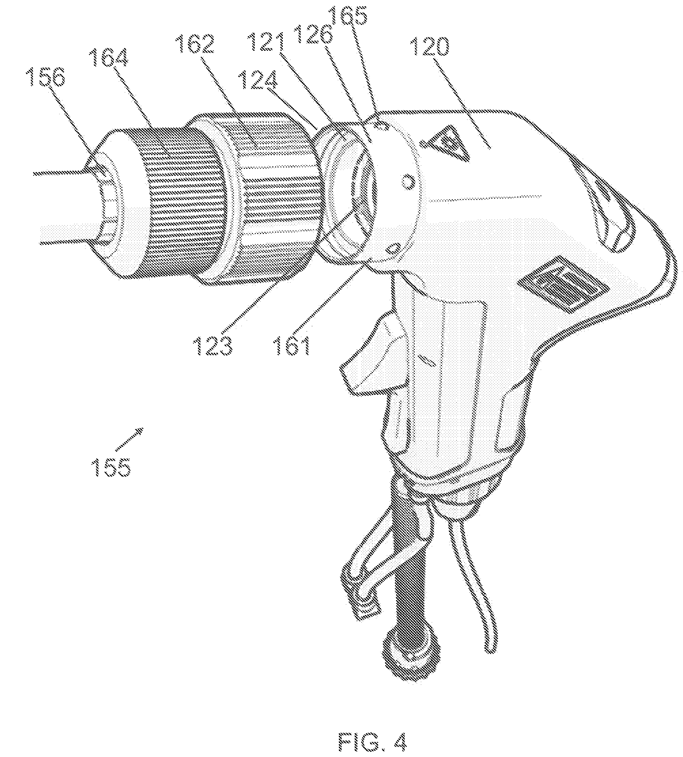

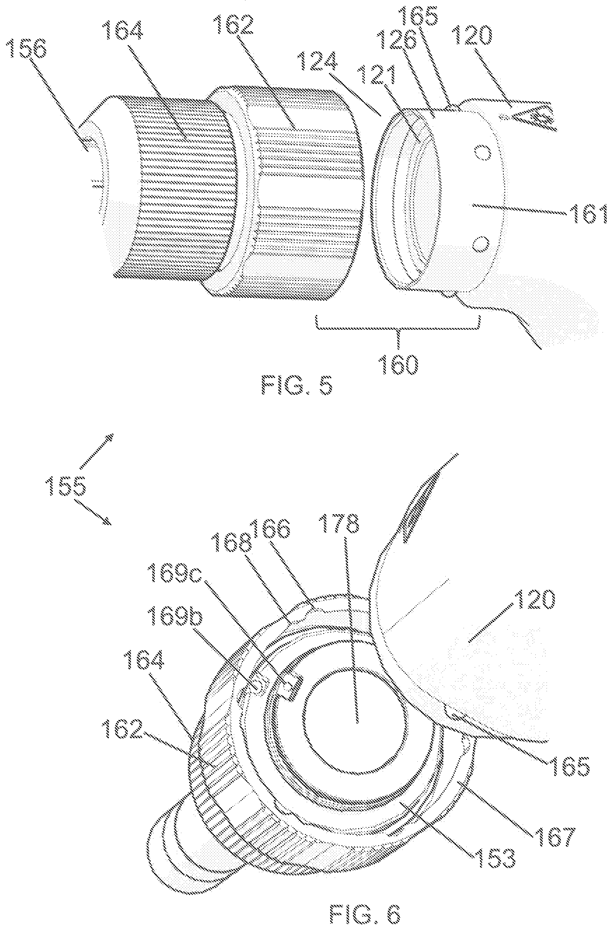

FIGS. 4-13 show aspects of the coupling mechanism 160 in accordance with at least one embodiment. The coupling mechanism 160 comprises a retaining 161 (shown in at least FIGS. 4, 5, 7A-7D, which may also be referred to as a receving portion) that is formed on an output end 124 (e.g., see FIGS. 4 and 5) of the handheld device 120, and an engagement portion 162 (shown in at least FIGS, 5, 6, 8-11, 13, 13A) that is configured to be releasably attachable to the nozzle and angage with the retaining portion 161.

The retaining portion 161 is formed on an annular surface 126 of the output end 124 of the handheld device 120. The annular surface 126 is configured with at least one recess 163 and a ball or pin 165 disposed within the at least one recess 163. In one embodiment, the recess 163 and ball 165 combination is disposed st equidistant locations around the primeter of the annular surface 126.

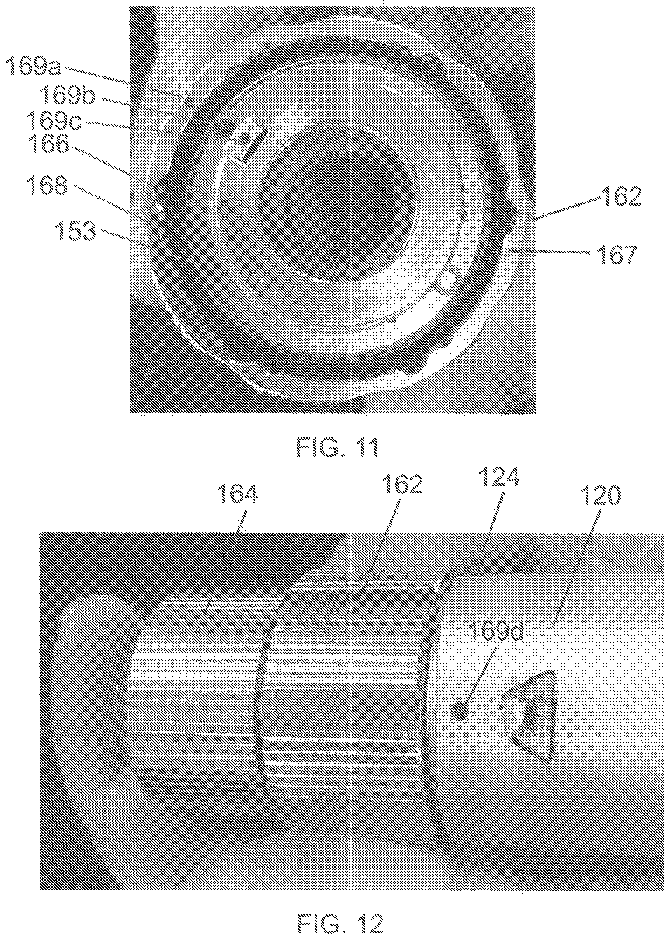

The engagement portion 162 comprises an annular collar 167 (e.g., see FIGS. 6, 11). An inner circumferential surface of the annular collar 167 is configured with at least one pair of arcuate shaped slots 166, 168, and each of these slots is configured to receive the ball 165. As can be appreciated, each ball 165 of the retaining portion 161 is associated with a pair of arcuate shaped slots 166, 168, and therefore there are an equal number of balls and pairs of slots. The pair of arcuate shaped slots 166, 168 includes a first arcuate shaped slot 166 that is configured to initially engage with the ball, and a second arcuate shaped slot 168 that is configured to lock the engagement portion 162 to the retaining portion 161 when the engagement portion 162 is rotated with respect to the retaining portion 161. The ball 165 will therefore first be inserted into slot 166 and then when the engagement portion 162 is rotated, the ball will be inserted into slot168. The first arcuate shaped slot 166 is sized to be larger than the second arcuate shaped slot 168.

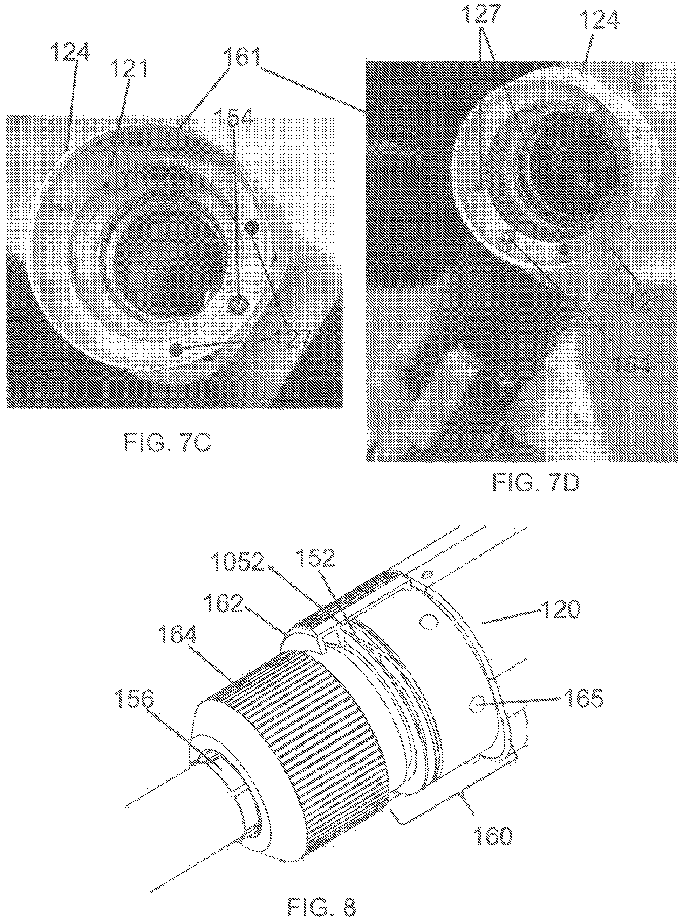

The engagement portion 162 also comprises a spring 152 (see FIG. 8) that engages with an inner (annular) surface 1052 of the engagement portion. Inner surface 1052 may include a lip or other protrusion that provides a surface for one end of the spring 152 to rest on. The spring 152 at least partially compresses when the engagement portion 162 is fully locked onto the retaining portion 161, and at least partially decompresses when the engagement portion 162 is removed from the retaining portion 161.

To remove the nozzle from the handheld device 120, the engagement portion 162 is rotated in the opposite direction while simultaneously applying pressure to overcome the force exerted by the spring 152 that is positioned within the engagement portion 162 and to move the ball 165 out of second slot 168 and maneuver the ball into first slot 166, i.e., move the ball until it engages with first slot 166 so that the nozzle can be released.

In accordance with some embodiments, one or more components of the coupling mechanism 160 are configured with an indexing feature 169, as shown in FIGS. 11 and 12. In this example, the annular collar 167 of the engagement portion 162 is configured with an indexing feature 169a that corresponds to an indexing feature 169d positioned on the output end 124 of the handheld device 120. This allows the operator to align the receiving portion 161 to the engagement portion 162 of the coupling mechanism 160. In one embodiment the indexing features 169 is configured as a visible indexing mark, as shown by the red dot in FIGS. 11 and 12. According to some embodiments, additional indexing features can be used on components of the engagement portion 162 or nozzle, such as indexing features 169b and 169c shows in FIGS. 6 and 11. For example, indexing feature 169b is located on core member 153 and indexing feature 169c is located on a ring enclosure that holds protective window 178.

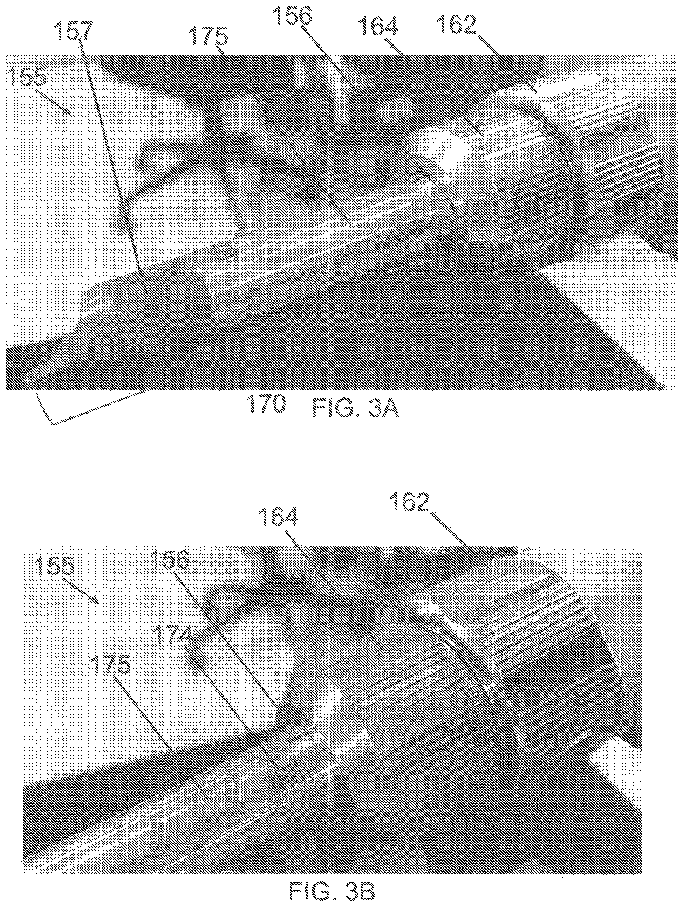

Referring to FIGS. 2, 4, 5, 6, and as also shown in FIGS. 3A, 3B, 8, 9, 13, and 13B, in accordance with at least one embodiment the nozzle assembly 155 further comprises a tightening device 164 or tightening knob that is configures to releasably secure the nozzle against the engagement portion 162. In one embodiment, the tightening device 164 and an attachment mechanism 156 (e.g., see FIGS. 3A, 3B, 9, 10, 13, 13A, 13B, and as described in further detail below) each have threaded portions for purposes of tightening the nozzle against the engagement portion 162.

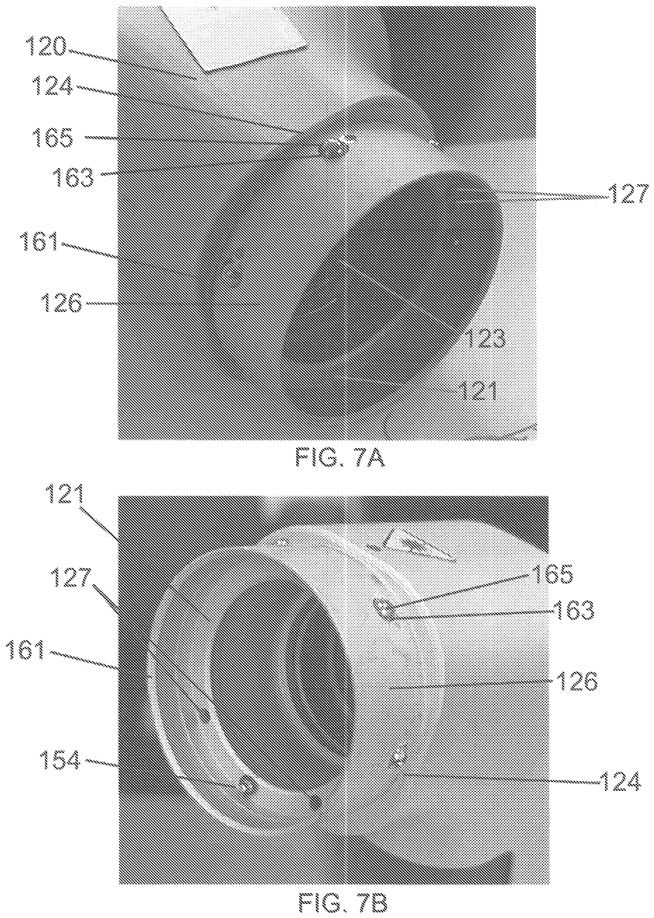

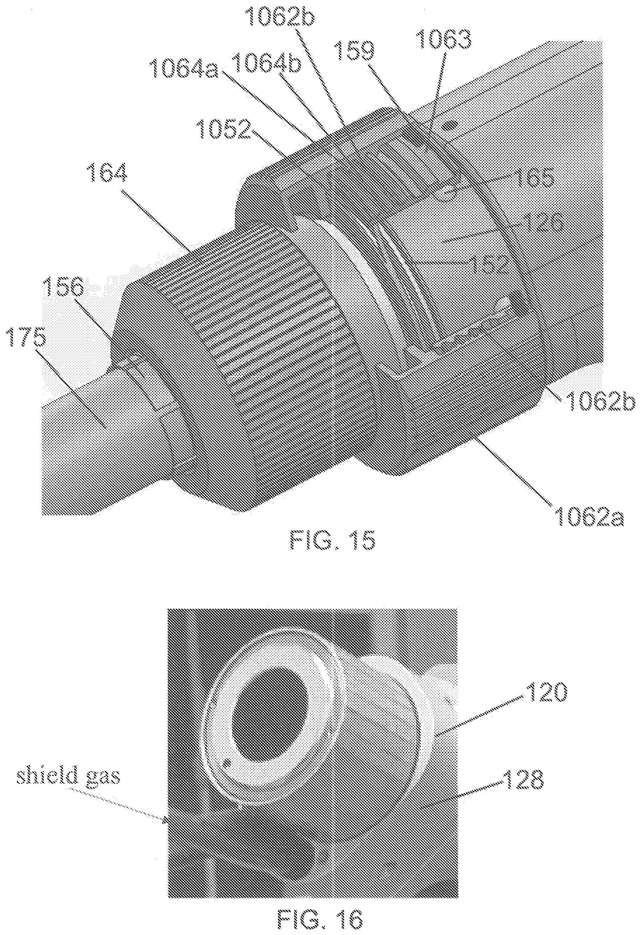

According to certain embodiments, one or more nozzles that can be used in the nozzle assembly 155 are configured to deliver gas to the surface during material processing operations. According to some embodiments, an inert or semi-inert gas (e.g., a shielding gas for welding operations) may be used, and in other embodiment the gas can be air or another gas. In some embodiments, the handheld device 120 is configured with the ability to deliver gas to the nozzle in combination with the laser radiation. For example, the output end 124 of the handheld device 120 in FIGS. 7A-7D is configured with at least one gas port 127 for directing or supplying gas to the nozzle. The output end 124 also supplies laser radiation to the nozzle, e.g., through the outlet 123. A photograph of the input end 128 of the handheld device 120 is shown in FIG. 16, where a gas can be introduced to the handheld device 120 and directed through the device to the gas port(s) 127 at the output end 124.

According to at least one embodiment, retaining portion 161 comprises an inner annular surface 121 or lip, as shown in FIGS. 4, 5, and 7A-7D. In at least one embodiment, the inner annular surface 121 comprises the at least one gas port 127. According to a further embodiment, and as shown in FIGS. 7B-7D, the inner annular surface 121 also comprises an electrical contact switch 154. Contact switch 154 makes contact with a corresponding contact surface (e.g., conductive pad) on the interior of the engagement portion 162, e.g., a conductive pad on core member 153, which is an electrical circuit that functions as part of the safety system associated with the laser. For instance, the electrical circuit may include the nozzle tip and be part of a safety interlock system that controls power to the laser when the nozzle tip is (or is not) in contact with the workpice surface.

In at least an additional embodiment, the retaining portion 161 further includes an identification mechanism (not shown in figures) so that controller 150 can identify which type of nozzle is attached to the engagement portion 162. For example, the retaining portion 161 (e.g., on inner annular surface 121) may comprise a conductive surface or terminal that connects to a resistor positioned on the engagement portion 162. When locked into place, the resistor sends a resistance value that correspond to the nozzle type (e.g., welding, cleaning, cutting, etc.) to the controller 150, which can then optionally be used to control laser parameters.

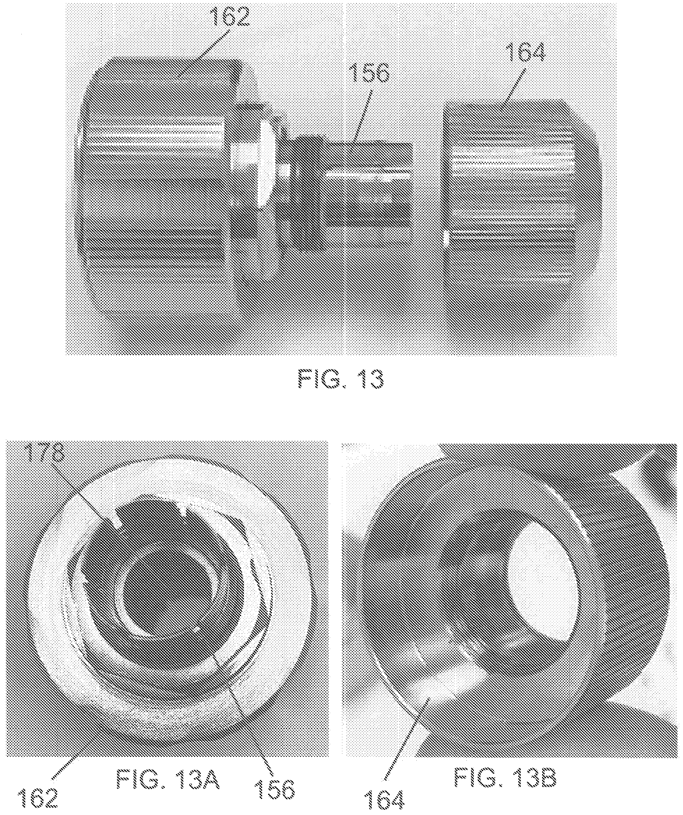

Nozzle 170 shown in FIGS. 2, 3A, 17A, 17B, 18, and 20 can be used for material process operations such as welding. In certain embodiments, the nozzle comprises a nozzle extension 175. In accordance with at least embodiment, the nozzle extension 175 is configured to provide or otherwise assist in providing a laminar flow of gas to the surface of the workpiece, e,g., a weld puddle on the surface. In contrast, a turbulent flow of gas increases the likelihood that atmospheric air containingoxygen and oxides can come into contact with the weld puddle and create weld quality problems. In accordance with an additional aspect, the nozzle extension 175 is configured to protect one or more components of the handheld device 120 and/or nozzle from debris created during welding. For example, as shown in FIGS. 6 and 13A, the nozzle is configured with a protective window 178 and the nozzle extension 175 can be used to protect this window. The nozzle extension 175 also functions to position the nozzle tip 157 from optics, such as focus lens.

A cross-section of the nozzle extension 175 is shown in the schematic representation of FIG. 19. In accordance with one embodiment, the nozzle extension 175 has an inlet 171, an outlet 179, and a central aperture 172 for permitting laser radiation and the gas to enter the central aperture 172 through the inlet 171 and to exit through the outlet 179. The nozzle extension 175 can be constructed from a metal material, such as steel. At least a portion of an interior surface of the central aperture 172 is configured with a debris shield 176 that restricts passage of debris generated during a material process operation. The debris shield 176 inhibits material processing debris, e.g., welding debris, from reaching the window 178 and other optics and components positioned upstream.

According to one non-limiting enbodiment, the debris shield 176 comprises threads on the interior surface of the central aperture 172. In some embodiments, the portion of the interior surface of the central aperture 172 that is configured with the debris shield 176 is at least partially tapered or narrowed, as shown in FIG. 19. The debris shield 176 allows the passage of laser radiation and gas to enter, pass through, and exit the nozzle extension 175, but inhibits debris generated in the vicinity of the outlet 179 from traveling back in the reverse upstream direction. The taper toward the central or inner portion of the interior of the nozzle extension 175 restrics the size of the opening that the debris can travel through, and the threads to "trap" any debris that traverse through this opening by providing a roughened increased surface area. According to some embodiments, and as shown in FIG. 19, the central aperture widens out toward the outlet past the tapered or narrowing feature.

In accordance with at least one embodiment, a nozzle tip 157 can be attached to the outlet 179 of the nozzle extension 175, as shown in FIGs. 2, 3A, 17A, 17B, 18, (and 20). As will be appreacited, the nozzle tip 157 can be configured for several different types of welding joints in welding applications. The nozzle tip 157 can be constructed from a metal material, such as copper or aluminium. In some embodiments, as shown in FIGS. 17A, 17B, and 18, the nozzle 170 further comprises a spacer 158 that attaches to the outlet 179 of the nozzle extension 175 and the nozzle tip 157 and is positioned in between the outlet 179 and the nozzle tip 158.

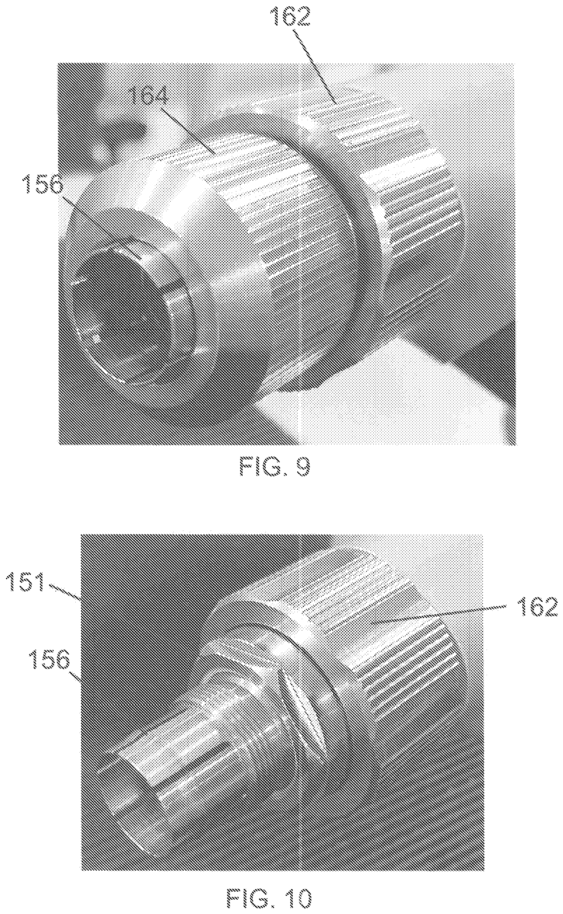

In one embodiment, the engagement portion 162 is configured or otherwise comprises an attachment mechanism 156 that attaches to the nozzle extension 175, as shown in FIGS. 3B, 9, 10, 13, and 13A. The attachment mechanism 156 attaches to the nozzle extension 175 via a compression connection, and can also be referred to to as a collet. As such, the collet 156 uses clamping presure by forming a collar around the nozzle extension. Several benefits are provided by such a mechanism, such as that the collet allows for self-centering and resistance against loosening. As shown in FIGS. 6 and 11, a core member 153 is disposed within an interior of the engagement portion 162. Attached to the core member 153 is a retaining member 151 (see FIG.10) that retains attachement mechanism 156 and a pair of nonconductive insolators (not shown in figures). The retaining member 151 also retains or otherwise captures spring 152 as previously that maintains pressure on the annular collar 167 of the engagement portion 162 and thereby aids in keeping the ball 165 in slot 168. According to some embodiments, the retaining member 151 serves on to the core member 153 to retain the nonconductive insulator and the attachment mechanism 156.

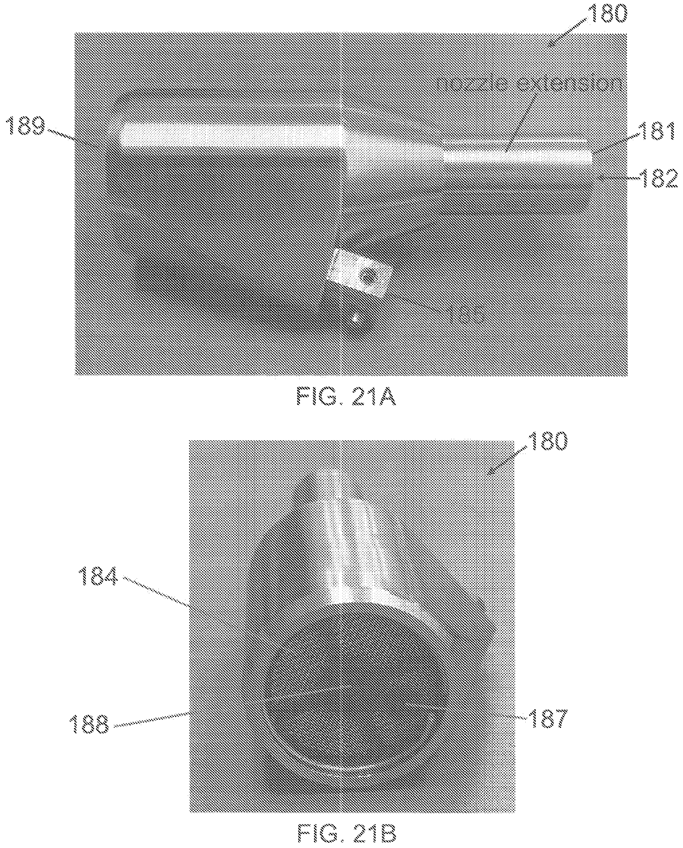

Although the examples here refer to attachment mechanism 156 attaching to the nozzle extension 175, it to be appreciated that the attachment mechanism 156 may also be used to attach to other types of nozzles and nozzle components. For instance, the nozzle extension for nozzle 180 of FIG. 21A can be attached to by the attachment mechanism 156. The compression connection provided by the attachment mechanism 156 can be used on nozzles having a tubular extension or any other configuration that can be accommodated by the attachment mechanism 156.

The protective window 178 attaches to one end of the core member 153 and the attachment mechanism 156 attaches to the other end of the core member 153. The engagement portion 162 also attaches to the core member 153. In one embodiments, spring 152 is configured or otherwise assists in protective window 178 in place (by exerting force against the window housing, thereby pushing it against the retaining portion 161 (i.e., inner annular surface 121)), although as will be readily appreciated, other retention mechanisms such as threaded retention mechanisms are also within the scope of this disclosure. The apring 152 configuration may also allow for the ability to replace the protective window 178 wíthout separate tools.

The core member 153 also assists in directing gas coming out of gas ports 127 of the handheld device 120 through to the nozzle. Gas is directed around the protective window 178 to the inlet 171 and central aperture 172 of the nozzle extension 175. For example, according to one embodiment the core memebr 153 has gas channels (e.g., that are drilled) that guide the gas around the protective window 178. It is to be appreciated that although the core member 153, attachment mechanism 156, retaining member 151, and engagement portion 162 are described herein separate parts, two or more of these components could be constructed into a single monolithic part.

In accordance with some embodiments, an exterior surface of the nozzle extension 175 can include graduation marks 174 comprising a series of lines, as shown in FIGS. 3B, 17B, and 18. The graduation marks 174 are located near the inlet end of the nozzle extension, where the nozzle extention 175 connects to the attachment mechanism 156, and are marked to assist a user in inserting the nozzle extension 175 into the attachment mechanism 156. For instance, a user may line up one of the lines of the graduation marks 174 with the end of the attachment mechanism 156.

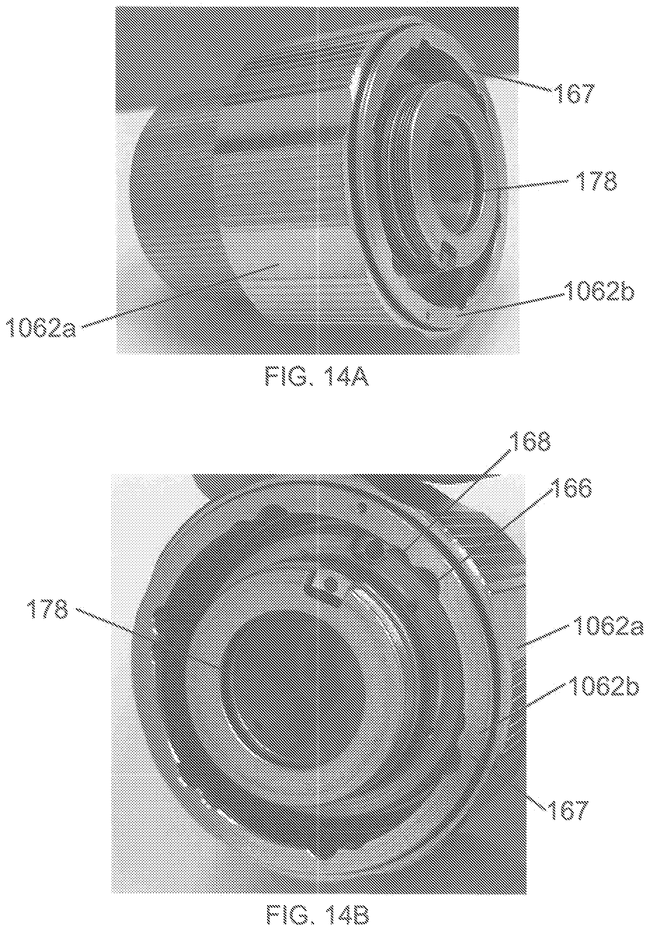

A second example of an engagement portion in accordance with another embodiment is shown in FIGS. 14A, 14B, and 15. According to this embodiment, the engagement portion comprises an outer ring 1062a and an inner ring 1062b. The outer ring 1062a is positioned on at least a portion of the outer circumferential surface of the inner ring 1062b. The inner circumferential surface of the outer ring 1062a has at least one groove or ridge 1064a that is configured to receive a corresponding ridge or groove 1064b on the outer circumferential surface of the inner ring 1062b. The inner ring 1062b is configured with the annular collar 167 having the pair of arcuate shaped slots 166, 168 as described above, and the outer ring 1062a is configured with the inner surface 1052 that engages with the spring 152 as described above. The twist-lock mechanism thus functions as described previously and in the interest of brevity this functionality is not repeated here. The engagement portion also comprises an O-ring 159 that is positioned between the outer ring 1062a and the inner ring 1062b. The O-ring 159 sits in a groove 1063 of the inner ring 1062b. In accordance with at least one aspect, the outer ring 1062a exerts a compressive force on the spring 152 to reduce or eliminate free play after final displacement of the engagement portion. The O-ring 159 functions to provide friction between the inner ring 1062b and outer ring 1062a, which removes free play and smooths the "felt" rooation/engagement between the inner and outer rings. The O-ring 159 also functions to limit how far the inner ring 1062b can rotate back and forth inside the outer ring 1062a, as well as preventing one ring from rotating out of the other ring.

Although the examples of nozzles described herein are primarily used for welding (with or without wire) applications, it is to be appreciated that the nozzle extension 175 and/or aspects thereof can be implemented with any nozzle that is used in material processing operations that create debris, such as laser cutting and drilling.

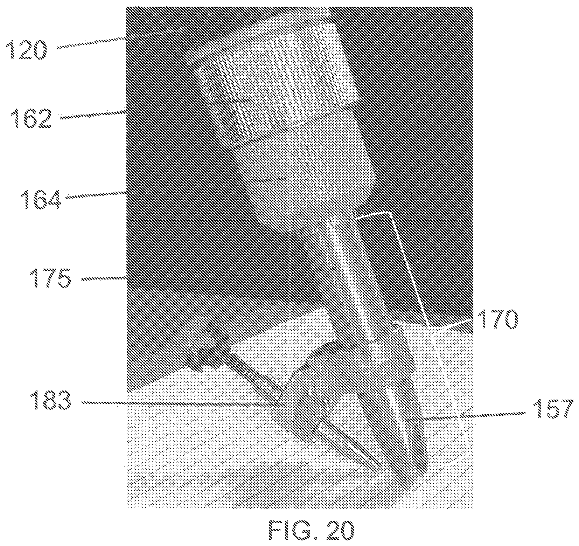

Turning now to FIG. 20, an example of a nozzle extension 175 (and nozzle up 157) capability is shown. Nozzle 170 comprises a nozzle extension 175 (and nozzle up 157) attached to the handheld device 120 via the coupling mechanism, with the engagement portion 162 and the tightening device 164 shown in the figure. Yhe nozzle further comprises an external wire feeding device 183 that attaches to the nozzle extension 175 that is configured to supply wire material to the surface being processed. As shown in FIG. 20, according to at least one embodiment, the external wire feeding device 183 attaches to the nozzle extension 175 with an attachment mechanism (not specifically labeled in the figure) such as a clamp. In addition, the external wire feeding device 183 is disposed below the nozzle extension 175 and can be positioned at an angle or range of angles in relation to the workpiece surface such that the wire feeding function is not detrimental to the welding process. Although not shown in FIG. 20, in some embodiments the nozzle tip 157 has a recess other retaining feature to aid in holding the external wire feeding device 183 in position.

FIGS. 21A and 21B show another ecample of a nozzle, generally indicated at 180, that is configure with wire feeding capability. FIG 21A is a photograph of a side view of nozzle 180, and FIG. 21B is a photograph of an end view(outlet side) of nozzle 180. In this instance, the wire feeding capability is "internal" to the nozzle such that the output of the wire is dispersed within an outle of the nozzle. Nozzle 180 comprises a central aperture 182, a first inlet 181 for permitimg laser radiation and a gas to enter the central aperture 182, a second inlet 185 coupled to a source of wire material, and an outlet 189 that includes a first outlet port 188 configured to permit the laser radiotion and the gas to exit the central aperture 182, and a second outlet port 187 configured to supply the wire material to the workpiece surface. The first inlet 1818 can be coupled to the handheld device 120 via the coupling mechanism 160 described above. Nozzle 180 also includes a debris shield, such a s debris shield 184 configured as a screen as shown in FIG. 21B. The debris shield 184 is disposed in at least a portion of the outlet 189. Nozzle 180 is configured to attach to the attachment mechanism/collect 156 in place of the nozzle extension 175.

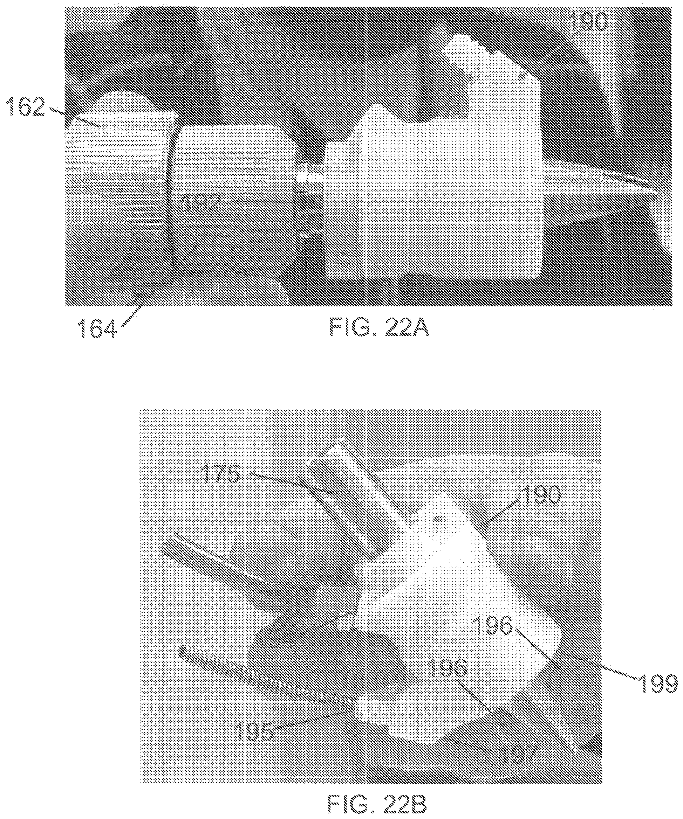

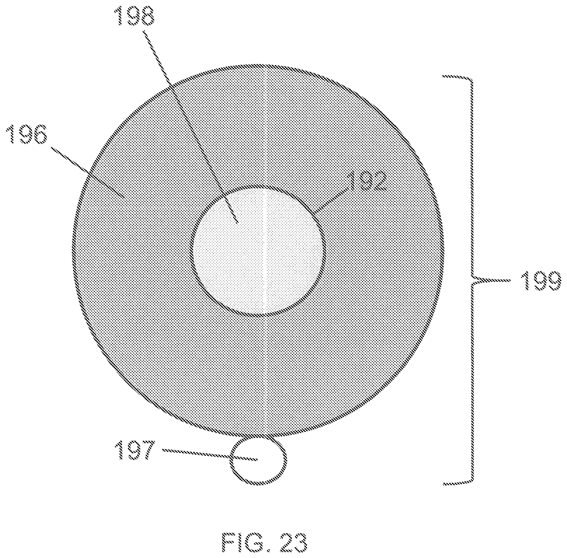

Turnning now to FIGS. 22A, 22B, and 23, another example of a nozzle configured with wire feeding capability is shown. In the example shown in the photographs of FIGS. 22A and 22B, this nozzle comprises an external wire feeding and gas device 190 that attaches to the nozzle extension 175. In this instance, the gas exixting through the outlet 179 of the nozzle extension 175 is a primary source of gas and the external wire feeding and gas device 190 is configured to supply wire material and a secondary source of gas to the workpiece surface. In accordance with one or more aspects, device 190 can also be referred to or characterized as a gas lens device. The functionality associated with device 190 is that iti is configured to create a wider coverage of gas around the weld puddle and helps in situations where gas from just the nozzle is inadequate is providing enough coverage on the workpiece. This latter problem may arise in instances where the shape or geometry of the workpiece causes the gas to blow away rather than to stay within the vicinity of the weld puddle. During welding operations the nozzle tip has the potential to be moved at a faster rate than the gas can accomodate or otherwise have the ability to from a shield around the weld puddle (i.e., the welding operation occurs ahead of the gas function), and device 190 addresses this problem.

The external wire feeding and gas device 190 comprises a central aperture 192 that is sized to fit around at least a portion of an outer peripheral wall of the nozzle extension 175, a gas inlet 194 coupled to a source of gas, a gas outlet 196 configured as an annular opening that surrounds the central aperture 192, a wire material inlet 195 coupled to a source of wire material, and a wire material outlet 197 configured to supply the wire material to the workpiece surface. The external wire and gas device 190 can be constructed from a metal material, such as stell. Device 190 can be configured to attach onto nozzle extension 175.

A schematic of an end view of device 190 is shown in FIG. 23. As a whole, the outlet 199 of the nozzle includes a first outlet port 198 configured to permit laser radiation and the primary source of gas to exit the central aperture 192 and a second outlet port 197 configured to supply the wire material to the workpiece surface. It is to be appreciated that although the external wire feeding and gas device 190 is shown being configured to attach to the nozzle extension 175, other configurations and designs within the scope of this disclosure are configured to integrate this capability into a single (monolithic) nozzle device with a central aperture for the primary source of gas and laser radiation. A first inlet permits laser radiation and a gas to enter the central aperture 192, and in some instances the first inlet would couple to a coupling mechanism (such coupling mechanism 160 described above) that releasably attaches the inlet to an output end 124 of the handheld device 120. A second inlet (similar to inlet 195) would be coupled to a source of wire material, a third inlet (similar to inlet 194) would be coupled to a source of gas. The outlet, such as outlet 199 shown in FIG. 23, includes a first outlet port 198 configured to permit laser radiation and the primary source of gas to exit the central aperture 192, and a second outlet port 197 is configured to supply the wire material to the surface, and a third outlet port 196 is configured to supply the secondary source of gas to the surface. The third outlet port 196 is configured as an annular opening that surrounds the first outlet port 198. The wire material outlet or second outlet port 197 can be disposed below the respective outlet port 198 for the primary gas and laser radiation, and the secondary outlet 196 for the gas.

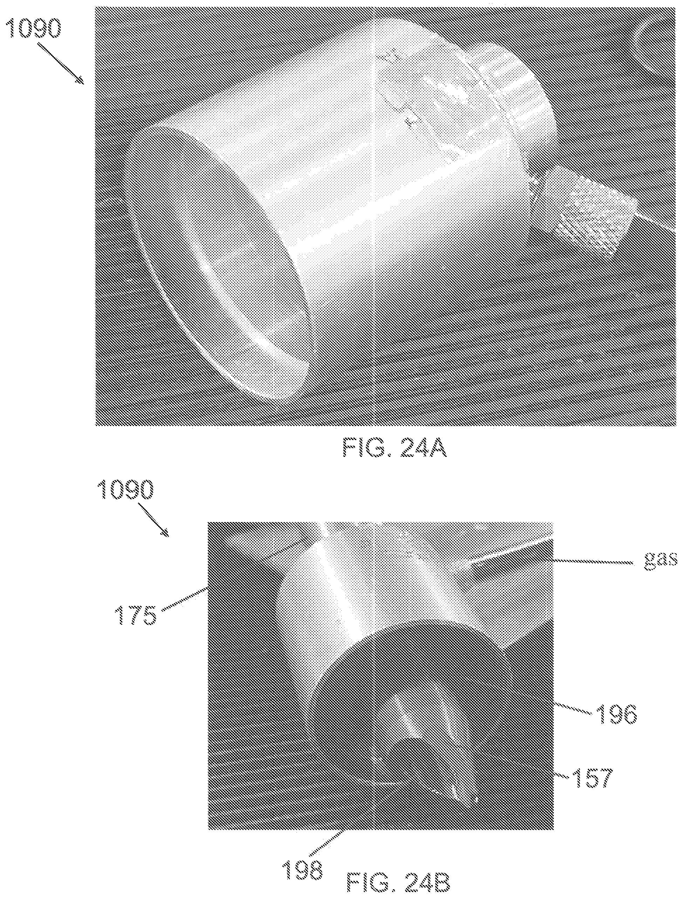

In accordance with one or more aspects, nozzle 180 of FIGS. 21A and 21B, and external wire feeding and gas device 190 of FIGS. 22A and 22B can each also be referred to as a gas lens device. An additional non-limiting example of a gas lens device is shown generally at 1090 in FIGS. 24A and 24B. In accordance with this embodiment, the gas lens device 1090 is configured to surround at least a portion of the nozzle extension 175 and at least a portion of the nozzle tip 157 that is attached to the nozzle extension. The gas lens device 1090 has a gas outlet 196 configured as an annular opening that surrounds the nozzle tip 157. In the example shown in GIF. 21B, the nozzle tip 157 that houses the outlet port 198 for the primary gas and laser radiation extends out past the secondary gas outlet 196. In other embodiments, the nozzle tip 157 may be in closer alignment or aligned with the gas outlet 196. The secondary source of gas is directed into the annular apace comprising the gas outlet 196, as indicated in FIG. 24B.

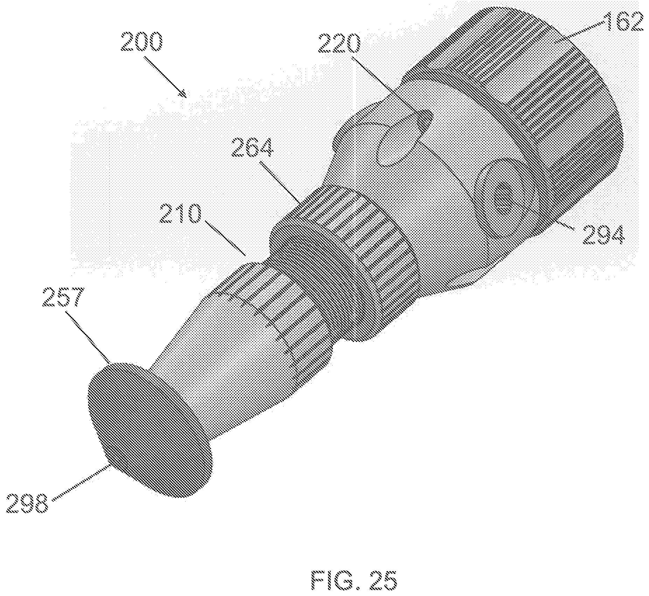

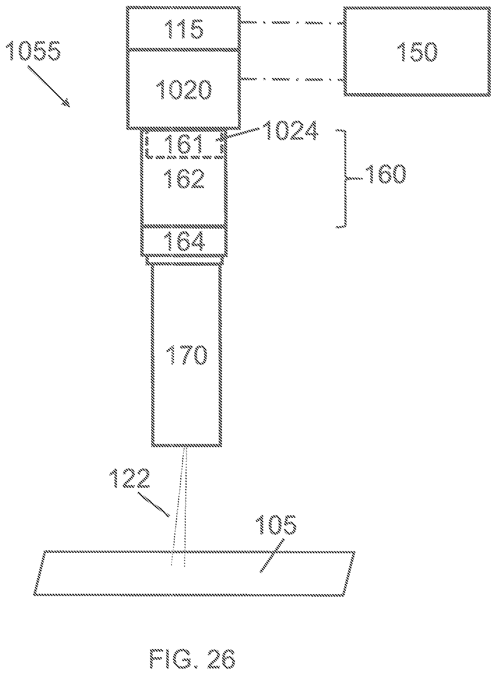

Although the nozzles shown in FIGS. 2A, 17A, 17B, 18, 20, 21A, 21B, 22S, and 22B are configured for welding operations, it is to be appreciated that nozzles configured to perform other types of welding and other material process operation such as drilling, cutting (e.g., cutting nozzle 200 described below), brazing and/or soldering, cladding, ablation, heat treating, additive manufacturing, and surgace cleaning and structuring are within the scope of this disclosure. These nozzles can couple to the handheld device 120 using a coupling mechanism such as coupling mechanism 160 described herein. This allows for a modular approach so that nozzles can be easily swapped out with the handheld device for different applications or different material process operations within a singe application. In accordance with some embodiments, the nozzle is configured as a cutting nozzle. One non-limiting example of a cutting nozzle is show generally at 200 in FIG. 25. Cutting nozzle 200 attaches to the handheld device 120 via the engagement portion 162 as described above (including the engagement portion with the inner and outer rings as described above in reference to FIGS. 14A, 14B, and 15). The cutting nozzle 200 comprises an outlet 298 for permitting laser radiation and the gas to exit the cutting nozzle. In some embodiments, the cutting nozzle 200 also comprises a z-axis focal lenght adjustment mechanism 210. This adjustment mechanism allows fot the laser beam to be focused onto a workoiece surface. For example, the cutting nozzle tip 257 may be positioned on a threaded cylindrical portion of the nozzle and can thus be rotated to adjust the focal spot of the laser beam. Cutting nozzle 200 may also included at least one x- and y- axis adjustment mechanism 220 for aligning the laser beam thath exist the handheld device to the outlet 298, i.e., by moving a central aperture that guides the laser beam through the nozzle to the tip. This adjustment mechanism 220 can be configured as a set point adjustment screw (e.g., two or more set point adjustment screws positioned around the circumference of the nozzle 200), although it is to be appreciated that other mechanical alignment options are also within the scope of this disclosure. In addition, accordign to some embodiments the controller 150 may function to adjust at least one of the x- y- and z-axis settings of the laser and therefore may be coupled to mechanical components of the nozzle 200. A tightening device or knob 264 is configured to releasably secure the nozzle against the engagement portion 162 and functions in a similar manner as with tightening device 164 discussed above, i.e., tightens down over the collet. The cutting nozzle 200 may also optionally include an inlet 294 for an additional source of gas. It is to be appreciated that cutting nozzle tip 257 may have different sized outlets 298 for different applications. Although the examples described herein refer to a nozzle assembly 155 used in combination with a handheld device 120 of a handheld laser system, in accordance with at least one embodiment, the nozzle assembly 115 can be used with a laser head that provides the source of laser radiation and the gas, and therefore aspects of the invention are not limited to handheld lasers. An example of a laser system with a laser head is shown in the schematic representation of FIG. 26. Nozzle assembly 1055 is similar to that described above in reference to nozzle assembly 155, but in this instance the retaining portion 161 is formed on an output end 1024 of a laser head 1020. The laser head 1020 directs laser radiation from a laser source 115 out the output end 1024 of the laser head 1020. The laser head 1020 may not contain the laser source 115, but does include optics and beam guiding components that are included in a housing so as to direct the laser radiation emitted from the laser source 115. Gas also exits output end 1024 of the laser head 1020 in a similar manner as described above in reference to outlet 124 of the handheld laser. For instance, the output end 1024 of the laser head 1020 is configured with at least one gas port 127 for supplying gas to the nozzle. Nozzle assembly 1055 comprises a nozzle, such as nozzle 170 (or nozzles 180, 200) as described above and a coupling mechanism 160 as described above. Laser beam 122 is emitted from nozzle 170 and is directed to workpiece 105. Controller 150 is also coulpled to the laser head 1020 and laser source 115 for purposes of sending control signals, and in some instances receiving feedback and/or input signals. As previously stated, nozzle assembly 1055 is similar to the described above in reference to nozzle assembly 155 and in the interest of brevity in not repeated here. For example, the coupling mechanism 160 includes a retaining portion 161 formed on an output end 1024 ot the laser head 1020 and an engagement portion 162 that is configured to be releasably attachable to the nozzle 170 and engage with the retaining portion 161. The retaining portion 161 is formed on an annular surface (not labeled in FIG. 26, but configured as described above in reference to annular surface 126) of the output end 1024 of the laser head 1020. The annular surface is configured with at least one recess and a ball disposed within the at least one recess, as with at least one recess 163 and ball 165 described previously. The engagement portion 162 may further comprise a spring (as described previously with regard to spring 152) that engages with an inner surface of the engagement portion 162 (e.g., see FIGS. 8 and 15). The engagement portion may comprise an outer ring 1062a and an inner ring 1062b, as described above in reference to FIGS. 14A, 14B, and 15, where the inner ring 1062b is configured with the annular collar 167 having the pair of arcuate shaped slots 166, 168 and the outer ring 1062a is configured with the inner surface that engages with the spring 152. The nozzle assembly 160 may also include a tightening device 164 as previously described. As mentioned above, the coupling mechanism 160 is configured as a twist-lock mechanism and does not include any threads. Nozzle 170 may also comprise a nozzle extension, such as nozzle extension 175 as previously described having a built-in debris shield 176 configured on an interior surface of the central aperture 172 (e.g., see FIG. 19). The engagement portion comprises an attachament mechanism 156 that attaches to the nozzle extension 175 (or other tubular extension of the nozzle on other types of nozzles), as discussed above. The nozzle can be configured to perform at least one of a welding, drilling, cutting, brazing, soldering, cladding, ablation, and heat treating material process operation.

Having thus described several aspects of at least one example, it is to be appreciated that various alterations, modifications, and improvements will readily occur to those skilled in the art. For instance, examples disclosed herein may also be used in other contexts. Such alterations, modifications, and improvements are intended to be part of this disclosure, and are intended to be within the scope of the examples discussed herein, without departing from the scope of the present invention, as defined in the appended claims.

## Claims

1. A nozzle assembly (155) and a handheld device (120) for performing material processing operations with a handheld laser system (100) on a surface of a workpiece (105), the handheld laser system having a laser source (115) configured to generate laser radiation, the handheld device (120) being configured to guide the laser radiation, the handheld laser system also having an optical fiber (130) coupling the handheld device to the laser source, the nozzle assembly comprising:
a nozzle (170, 180, 190, 200) configured to deliver the laser radiation to the surface; and
a coupling mechanism (160) that includes
a retaining portion (161) formed on an output end (124) of the handheld device (120), and
an engagement portion (162) configured to be releasably attachable to the nozzle (170, 180, 190, 200) and engage with the retaining portion (161), and
a tightening device (164) that is configured to releasably secure the nozzle (170, 180, 190, 200) against the engagement portion (162),
wherein the retaining portion (161) is formed on an annular surface (126) of the output end (124), wherein the annular surface (126) is configured with at least one recess (163) and a ball (165) disposed within the at least one recess.

2. The nozzle assembly of claim 1, wherein the engagement portion (162) comprises an annular collar (167), an inner circumferential surface of the annular collar configured with at least one pair of arcuate shaped slots (166, 168), each slot configured to receive a ball (165) of the at least one recess and ball.

3. The nozzle assembly and the handheld device of claim 2, wherein the pair of arcuate shaped slots includes a first arcuate shaped slot (166) configured to engage with the ball, and a second arcuate shaped slot (168) configured to lock the engagement portion (162) to the retaining portion (161) when the engagement portion is rotated with respect to the retaining portion, wherein the first arcuate shaped slot is sized to be larger than the second arcuate shaped slot.

4. The nozzle assembly and the handheld device of claim 2, wherein the annular collar (167) is configured with an indexing feature (169a, 169b) that corresponds to an indexing feature (169c, 169d) positioned on the output end of the handheld device, wherein each of the indexing features are configured as a visible indexing mark.

5. The nozzle assembly and the handheld device of claim 2, wherein the engagement portion (162) further comprises a spring (152) that engages with an inner surface (1052) of the engagement portion, wherein the engagement portion comprises an outer ring (1062a) and an inner ring (1062b),
the inner ring configured with the annular collar having the pair of arcuate shaped slots, and
the outer ring configured with the inner surface that engages with the spring, further comprising an O-ring (159) positioned between the outer ring and the inner ring.

6. The nozzle assembly and the handheld device of claim 1, wherein the coupling mechanism is configured as a twist-lock mechanism.

7. The nozzle assembly and the handheld device of claim 1, wherein the output end of the handheld device is configured with at least one gas port (127) for supplying gas to the nozzle.

8. The nozzle assembly and the handheld device of claim 7, wherein the nozzle is configured as a cutting nozzle, the cutting nozzle comprising
an outlet (298) for permitting laser radiation and the gas to exit the cutting nozzle, and
a z-axis focal length adjustment mechanism (210), wherein the nozzle comprises a nozzle extension (175) having an inlet (171), an outlet (179), and a central aperture (172)
for permitting laser radiation and the gas to enter the central aperture through the inlet and to exit through the outlet.

9. The nozzle assembly and the handheld device of claim 8, wherein at least a portion of an interior surface of the central aperture of the nozzle extension is configured with a debris shield (176)
that restricts passage of debris generated during a material process operation.

10. The nozzle assembly and the handheld device of claim 9, wherein the debris shield comprises threads on the interior surface of the central aperture.

11. The nozzle assembly and the handheld device of claim 9, wherein the nozzle is configured with a protective window (178) and the debris shield inhibits material processing debris from reaching the window.

12. The nozzle assembly and the handheld device of claim 8, wherein the nozzle further comprises an external wire feeding device (183) that attaches to the nozzle extension, the wire feeding device configured to supply wire material to the surface, wherein the external wire feeding device is disposed below the nozzle extension.

13. The nozzle assembly and the handheld device of claim 8, wherein the gas exiting through the outlet of the nozzle extension is a primary source of gas and the nozzle further comprises an external wire feeding and gas device (190) that attaches to the nozzle extension, the external wire feeding and gas device configured to supply wire material and a secondary source of gas to the surface,
wherein the external wire feeding and gas device comprises:
a central aperture (192) sized to fit around at least a portion of an outer peripheral wall of the nozzle extension;
a gas inlet (194) coupled to a source of gas;
a gas outlet (196) configured as an annular opening that surrounds the central aperture;
a wire material inlet (195) coupled to a source of wire material; and
a wire material outlet (197) configured to supply the wire material to the surface,
wherein the wire material outlet is disposed below the gas outlet.

14. The nozzle assembly and the handheld device of claim 8, further comprising a gas lens device (1090) configured to surround at least a portion of the nozzle extension and at least a portion of a nozzle tip attached to the nozzle extension, the gas lens device having a gas outlet configured as an annular opening that surrounds the nozzle tip.

## Patentansprüche

1. Düsenanordnung (155) und Handvorrichtung (120) zum Ausführen von Materialverarbeitungsoperationen mit einem Handlasersystem (100) an einer Oberfläche eines Werkstücks (105), wobei das Handlasersystem eine Laserquelle (115), die konfiguriert ist, Laserstrahlung zu erzeugen, aufweist, wobei die Handvorrichtung (120) konfiguriert ist, die Laserstrahlung zu führen, wobei das Handlasersystem außerdem eine optische Faser (130), die die Handvorrichtung mit der Laserquelle koppelt, aufweist, wobei die Düsenanordnung Folgendes umfasst:
eine Düse (170, 180, 190, 200), die konfiguriert ist, die Laserstrahlung an die Oberfläche zu liefern; und
einen Kopplungsmechanismus (160), der Folgendes enthält:
einen Halteabschnitt (161), der an einem Ausgangsende (124) der Handvorrichtung (120) gebildet ist, und
einen Eingriffabschnitt (162), der konfiguriert ist, an der Düse (170, 180, 190, 200) lösbar anbringbar zu sein und mit dem Halteabschnitt (161) in Eingriff zu gelangen, und
eine Anzugvorrichtung (164), die konfiguriert ist, die Düse (170, 180, 190, 200) an dem Eingriffabschnitt (162) lösbar zu sichern,
wobei der Halteabschnitt (161) an einer ringförmigen Oberfläche (126) des Ausgangsendes (124) gebildet ist, wobei die ringförmige Oberfläche (126) mit wenigstens einer Aussparung (163) und einer in der wenigstens einen Aussparung angeordneten Kugel (165) konfiguriert ist.

2. Düsenanordnung nach Anspruch 1, wobei der Eingriffabschnitt (162) einen Ringbund (167) umfasst, wobei eine Innenumfangsfläche des Ringbunds mit wenigstens einem Paar bogenförmiger Schlitze (166, 168) konfiguriert ist, wobei jeder Schlitz konfiguriert ist, eine Kugel (165) der wenigstens einen Aussparung und Kugel aufzunehmen.

3. Düsenanordnung und Handvorrichtung nach Anspruch 2, wobei das Paar bogenförmiger Schlitze einen ersten bogenförmigen Schlitz (166), der konfiguriert ist, mit der Kugel in Eingriff zu gelangen, und einen zweiten bogenförmigen Schlitz (168), der konfiguriert ist, den Eingriffabschnitt (162) an dem Halteabschnitt (161) zu verriegeln, wenn der Eingriffabschnitt in Bezug auf den Halteabschnitt gedreht wird, enthält, wobei der erste bogenförmige Schlitz größer als der zweite bogenförmige Schlitz bemessen ist.

4. Düsenanordnung und Handvorrichtung nach Anspruch 2, wobei der Ringbund (167) mit einem Indexierungsmerkmal (169a, 169b), das einem an dem Außenende der Handvorrichtung positionierten Indexierungsmerkmal (169c, 169d) entspricht, konfiguriert ist, wobei jedes der Indexierungsmerkmale als eine sichtbare Indexierungsmarkierung konfiguriert ist.

5. Düsenanordnung und Handvorrichtung nach Anspruch 2, wobei der Eingriffabschnitt (162) ferner eine Feder (152) umfasst, die mit einer Innenoberfläche (1052) des Eingriffabschnitts in Eingriff ist, wobei der Eingriffabschnitt einen Außenring (1062a) und einen Innenring (1062b) umfasst, wobei
der Innenring, der mit dem Ringbund konfiguriert ist, das Paar bogenförmiger Schlitze aufweist, und
der Außenring, der mit der Innenoberfläche, die mit der Feder in Eingriff ist, konfiguriert ist, ferner einen zwischen dem Außenring und dem Innenring positionierten O-Ring (159) umfasst.

6. Düsenanordnung und Handvorrichtung nach Anspruch 1, wobei der Kopplungsmechanismus als ein Twistlock-Mechanismus konfiguriert ist.

7. Düsenanordnung und Handvorrichtung nach Anspruch 1, wobei das Ausgangsende der Handvorrichtung mit wenigstens einer Gasöffnung (127), um der Düse Gas zuzuführen, konfiguriert ist.

8. Düsenanordnung und Handvorrichtung nach Anspruch 7, wobei die Düse als eine Schneiddüse konfiguriert ist, wobei die Schneiddüse umfasst:
einen Auslass (298), um zu ermöglichen, dass Laserstrahlung und das Gas aus der Schneiddüse austreten,
und einen z-Achsen-Brennweiten-Einstellmechanismus (210),
wobei die Düse einen Düsenfortsatz (175) umfasst, der einen Einlass (171), einen Auslass (179) und einen zentralen Durchlass (172), um zu ermöglichen, dass Laserstrahlung und das Gas durch den Einlass in den zentralen Durchlass eintreten und durch den Auslass austreten, aufweist.

9. Düsenanordnung und Handvorrichtung nach Anspruch 8, wobei wenigstens ein Abschnitt der Innenoberfläche des zentralen Durchlasses des Düsenfortsatzes mit einem Schmutzschutzschild (176), der den Durchgang von während einer Materialverarbeitungsoperation erzeugtem Schmutz beschränkt, konfiguriert ist.

10. Düsenanordnung und Handvorrichtung nach Anspruch 9, wobei der Schmutzschutzschild an der Innenoberfläche des zentralen Durchlasses ein Gewinde umfasst.

11. Düsenanordnung und Handvorrichtung nach Anspruch 9, wobei die Düse mit einem Schutzfenster (178) konfiguriert ist und wobei der Schmutzschutzschild verhindert, dass Materialverarbeitungsschmutz das Fenster erreicht.

12. Düsenanordnung und Handvorrichtung nach Anspruch 8, wobei die Düse ferner eine externe Drahtzuführungsvorrichtung (183), die an dem Düsenfortsatz angebracht werden kann, umfasst, wobei die Drahtzuführungsvorrichtung konfiguriert ist, der Oberfläche Drahtmaterial zuzuführen, wobei die externe Drahtzuführungsvorrichtung unter dem Düsenfortsatz angeordnet ist.

13. Düsenanordnung und Handvorrichtung nach Anspruch 8, wobei das durch den Auslass des Düsenfortsatzes austretende Gas eine Hauptgasquelle ist und wobei die Düse ferner eine externe Drahtzuführungs- und Gasvorrichtung (190), die an dem Düsenfortsatz angebracht wird, umfasst, wobei die externe Drahtzuführungs- und Gasvorrichtung konfiguriert ist, der Oberfläche Drahtmaterial und eine Sekundärgasquelle zuzuführen,
wobei die externe Drahtzuführungs- und Gasvorrichtung Folgendes umfasst:
einen zentralen Durchlass (192), der so bemessen ist, dass er wenigstens um einen Abschnitt einer Außenumfangswand des Düsenfortsatzes passt;
einen Gaseinlass (194), der mit einer Gasquelle gekoppelt ist;
einen Gasauslass (196), der als eine ringförmige Öffnung, die den zentralen Durchlass umgibt, konfiguriert ist;
einen Drahtmaterialeinlass (195), der mit einer Quelle für Drahtmaterial gekoppelt ist; und
einen Drahtmaterialauslass (197), der konfiguriert ist, der Oberfläche das Drahtmaterial zuzuführen, wobei der Drahtmaterialauslass unter dem Gasauslass angeordnet ist.

14. Düsenanordnung und Handvorrichtung nach Anspruch 8, die ferner eine Gaslinsenvorrichtung (1090) umfasst, die konfiguriert ist, wenigstens einen Abschnitt des Düsenfortsatzes und wenigstens einen Abschnitt einer an dem Düsenfortsatz angebrachten Düsenspitze zu umgeben, wobei die Gaslinsenvorrichtung einen Gasauslass, der als eine ringförmige Öffnung, die die Düsenspitze umgibt, konfiguriert ist, aufweist.

## Revendications

1. Ensemble de buse (155) et dispositif portatif (120) permettant d'effectuer des opérations de traitement de matériau avec un système laser portatif (100) sur une surface d'une pièce à usiner (105), le système laser portatif ayant une source laser (115) configurée pour générer un rayonnement laser, le dispositif portatif (120) étant configuré pour guider le rayonnement laser, le système laser portatif ayant également une fibre optique (130) couplant le dispositif portatif à la source laser, l'ensemble de buse comprenant :
une buse (170, 180, 190, 200) configurée pour fournir le rayonnement laser à la surface ; et
un mécanisme de couplage (160) qui comprend
une partie de retenue (161) formée sur une extrémité de sortie (124) du dispositif portatif (120), et
une partie de mise en prise (162) configurée pour être attachée de manière amovible à la buse (170, 180, 190, 200) et venir en prise avec la partie de retenue (161), et
un dispositif de serrage (164) configuré pour fixer de manière amovible la buse (170, 180, 190, 200) contre la partie de mise en prise (162),
la partie de retenue (161) étant formée sur une surface annulaire (126) de l'extrémité de sortie (124), la surface annulaire (126) étant configurée avec au moins un évidement (163) et une bille (165) disposée à l'intérieur de l'au moins un évidement.

2. Ensemble de buse selon la revendication 1, la partie de mise en prise (162) comprenant un collier annulaire (167), une surface circonférentielle intérieure du collier annulaire étant configurée avec au moins une paire de fentes de forme arquée (166, 168), chaque fente étant configurée pour recevoir une bille (165) de l'au moins un évidement et de la bille.

3. Ensemble de buse et dispositif portatif selon la revendication 2, la paire de fentes de forme arquée comprenant une première fente de forme arquée (166) configurée pour venir en prise avec la bille, et une seconde fente de forme arquée (168) configurée pour verrouiller la partie de mise en prise (162) sur la partie de retenue (161) lorsque la partie de mise en prise tourne par rapport à la partie de retenue, et la première fente de forme arquée étant dimensionnée pour être plus grande que la seconde fente de forme arquée.

4. Ensemble de buse et dispositif portatif selon la revendication 2, le collier annulaire (167) étant configuré avec un élément d'indexation (169a, 169b) qui correspond à un élément d'indexation (169c, 169d) positionné sur l'extrémité de sortie du dispositif portatif, et chacun des éléments d'indexation étant configuré comme une marque d'indexation visible.

5. Ensemble de buse et dispositif portatif selon la revendication 2, la partie de mise en prise (162) comprenant en outre un ressort (152) qui vient en prise avec une surface intérieure (1052) de la partie de mise en prise, la partie de mise en prise comprenant une bague extérieure (1062a) et une bague intérieure (1062b),
la bague intérieure étant configurée avec le collier annulaire ayant la paire de fentes de forme arquée, et
la bague extérieure étant configurée avec la surface intérieure qui vient en prise avec le ressort, comprenant en outre un joint torique (159) positionné entre la bague extérieure et la bague intérieure.

6. Ensemble de buse et dispositif portatif selon la revendication 1, le mécanisme de couplage étant configuré comme un mécanisme de verrouillage rotatif.

7. Ensemble de buse et dispositif portatif selon la revendication 1, l'extrémité de sortie du dispositif portatif étant configurée avec au moins un orifice de gaz (127) pour fournir du gaz à la buse.

8. Ensemble de buse et dispositif portatif selon la revendication 7, la buse étant configurée comme une buse de coupe, la buse de coupe comprenant une sortie (298) pour permettre au rayonnement laser et au gaz de sortir de la buse de coupe, et
un mécanisme de réglage de la distance focale de l'axe z (210),
la buse comprenant une extension de buse (175) ayant une entrée (171), une sortie (179), et une ouverture centrale (172) pour permettre au rayonnement laser et au gaz d'entrer dans l'ouverture centrale à travers l'entrée et de sortir à travers la sortie.

9. Ensemble de buse et dispositif portatif selon la revendication 8, au moins une partie d'une surface intérieure de l'ouverture centrale de l'extension de buse étant configurée avec un écran anti-débris (176) qui limite le passage des débris générés pendant une opération de traitement de matériau.

10. Ensemble de buse et dispositif portatif selon la revendication 9, l'écran anti-débris comprenant des filets sur la surface intérieure de l'ouverture centrale.

11. Ensemble de buse et dispositif portatif selon la revendication 9, la buse étant configurée avec une fenêtre protectrice (178) et l'écran anti-débris empêchant les débris de traitement de matériau d'atteindre la fenêtre.

12. Ensemble de buse et dispositif portatif selon la revendication 8, la buse comprenant en outre un dispositif d'alimentation en fil externe (183) qui se fixe à l'extension de buse, le dispositif d'alimentation en fil étant configuré pour alimenter la surface en matériau de fil, et le dispositif d'alimentation en fil externe étant disposé au-dessous de l'extension de buse.

13. Ensemble de buse et dispositif portatif selon la revendication 8, le gaz sortant par la sortie de l'extension de buse étant une source primaire de gaz et la buse comprenant en outre un dispositif externe d'alimentation en fil et de gaz (190) qui se fixe à l'extension de buse, le dispositif externe d'alimentation en fil et de gaz étant configuré pour fournir un matériau de fil et une source secondaire de gaz à la surface, le dispositif externe d'alimentation en fil et de gaz comprenant :
une ouverture centrale (192) dimensionnée pour s'ajuster autour d'au moins une partie d'une paroi périphérique externe de l'extension de buse ;
une entrée de gaz (194) raccordée à une source de gaz ;
une sortie de gaz (196) configurée comme une ouverture annulaire qui entoure l'ouverture centrale ;
une entrée de matériau de fil (195) couplée à une source de matériau de fil ; et
une sortie de matériau de fil (197) configurée pour fournir le matériau de fil à la surface, la sortie de matériau de fil étant disposée en dessous de la sortie de gaz.

14. Ensemble de buse et dispositif portatif selon la revendication 8, comprenant en outre un dispositif de lentille à gaz (1090) configuré pour entourer au moins une partie de l'extension de buse et au moins une partie d'une pointe de buse fixée à l'extension de buse, le dispositif de lentille à gaz ayant une sortie de gaz configurée comme une ouverture annulaire qui entoure la pointe de buse.
